Europäisches Patentamt

European Patent Office

Office européen des brevets

(11) Veröffentlichungsnummer: **0 360 245**
**A2**

(12) # EUROPÄISCHE PATENTANMELDUNG

(21) Anmeldenummer: 89117386.6

(51) Int. Cl.5: **B62M 3/08**

(22) Anmeldetag: 20.09.89

(30) Priorität: 21.09.88 DE 3832067

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: UNION Sils, van de Loo & Co.
GmbH
Ardeyer Strasse 13/15
D-5758 Fröndenberg/Ruhr(DE)

(72) Erfinder: Desvages, André
La Balliere
Cerelles F-37390 Mettray(FR)
Erfinder: Schalk, Wolfgang
Im Hasewinkel 14
D-5860 Iserlohn(DE)
Erfinder: Herold, Ulrich
Rolevinckstrasse 24
D-4600 Dortmund(DE)

(74) Vertreter: Patentanwaltsbüro Cohausz &
Florack
Schumannstrasse 97
D-4000 Düsseldorf 1(DE)

(54) **Fussrastenpedal.**

(57) Die Erfindung betrifft eine Vorrichtung zum Halten eines Schuhs 5 an einem Fahrradpedal 1 mit einer unter dem Schuh befestigten Adapterplatte 3, die an der Pedaloberseite im vorderen und hinteren Bereich jeweils durch formschlüssige, insbesondere hakenförmige Verbindungen 1b, 3a, 3b, 4b gehalten ist, wobei die Adapterplatte im befestigten Zustand um den vorderen Verbindungsbereich 1b, 3a bei weiterer Anlage auf der Pedaloberseite verdrehbar und hierdurch der hintere Teil der Adapterplatte 3 seitlich verschwenkbar ist um das zweiseitige Formgehemme der hinteren Verbindung 3b, 4b lösen, wobei die Pedalteile 4, 6 der hinteren Verbindung zusammen mit der um die vordere Verbindung 1b, 3a drehbaren Adapterplatte 3 begrenzt drehbeweglich und erst außerhalb dieses freien Bewegungsbereichs lösbar sind.

Fig. 1

## Fußrastenpedal

Die Erfindung betrifft eine Vorrichtung zum Halten eines Schuhs an einem Fahrradpedal mit einer unter dem Schuh befestigten Adapterplatte, die an der Pedaloberseite im vorderen und hinteren Bereich jeweils durch formschlüssige, insbesondere hakenförmige Verbindungen gehalten ist, wobei die Adapterplatte im befestigten Zustand um den vorderen Verbindungsbereich bei weiterer Anlage auf der Pedaloberseite verdrehbar und hierdurch der hintere Teil der Adapterplatte seitlich verschwenkbar ist um das zweiseitige Formgehemme der hinteren Verbindung zu lösen.

Ein solches Fußrastenpedal ermöglicht eine starre Verbindung zwischen Pedal und Schuh. Diese feste Verbindung wird insbesondere im Trainings- und Rennbetrieb benötigt, da hier der Fahrer das Pedal neben der Druckkraft mit einer Zugkraft belastet. Zum Ausüben einer Zugkraft sind Pedale mit Rennbügeln und Riemen sowie Sicherheitspedale mit Adapterplatten bekannt, die am Schuh fest montiert sind. Bei der Bügelverbindung tritt der Fahrer mit der Fußspitze in den Bügel und zieht den Schuh mittels Riemen fest. Bei lose eingestelltem Riemen rutscht der Schuh im Pedal und bei straff eingestelltem Riemen wird der Ausstieg blockiert.

Bei einem Sicherheitspedal ist die Adapterplatte kraft- und formschlüssig mit dem Pedal verbunden. Durch Drehen des Schuhs wird der Ausstieg aus der Verbindung ermöglicht. Ein Drehen des Schuhs um einen bestimmten Winkel ohne aus dem Pedal zu steigen, ist nicht möglich, so daß der Fahrer bei diesem Pedal den Fuß immer in einer starren Lage hält. Dies führt zu Ermüdungserscheinungen bei längeren Strecken. Im weiteren behindert diese starre Verbindung den Fahrer beim Spurten und beim Berganstieg - Wiegetritt. Auch wird die Adapterplatte bei starker Belastung um einige Winkelgrade hin und her bewegt. Dies führt zu Leistungsverlusten und zur Abnutzung der Adapterplatte, verbunden mit einem unerwünschten Klappern.

Aufgabe der Erfindung ist es, eine Vorrichtung der eingangs genannten Art so zu verbessern, daß im befestigtem Zustand der Schuh gegenüber der Pedale um einen bestimmten, insbesondere einstellbaren Winkel beweglich ist, ohne daß die Verbindung sich löst. Diese Aufgabe wird erfindungsgemäß dadurch gelöst, daß die Pedalteile der hinteren Verbindung zusammen mit der um die vordere Verbindung drehbaren Adapterplatte begrenzt drehbeweglich und erst außerhalb dieses freien Bewegungsbereichs lösbar sind und daß die Bewegung der Pedalteile der hinteren Verbindung, insbesondere des Gelenkarms zu beiden Seiten durch verstellbare Anschläge begrenzt ist.

Diese Vorrichtung läßt ein Drehen des Schuhs bzw. der Adapterplatte gegenüber dem Pedal um etwa 10 bis 15 Grad zu jeder Seite gegenüber der Mittellage zu, ohne daß die Verbindung gelöst wird. Erst nach einem Drehen über diesen begrenzten Bewegungsbereich hinaus geben die Verbindungsmittel des Pedals die Adapterplatte frei. Durch diese begrenzte Bewegungsfreiheit kann der Fahrer seine Kräfte sehr viel besser einsetzen und es kommt weniger zu Verspannungen und Ermüdungen der Beinmuskulatur. Ferner ist der Verschleiß der Verbindung zwischen Adapterplatte und Pedale geringer. Ferner kann der Fahrer sehr genau den von ihm gewünschten freien Drehbewegungsbereich bestimmen und optimal einstellen.

Vorzugsweise wird vorgeschlagen, daß die Pedalteile der hinteren Verbindung um eine zwischen vorderer und hinterer Verbindung liegende zur Adapterplatte senkrechte Drehachse begrenzt verschwenkbar sind. Hierbei kann ein in eine Ausnehmung der Adapterplatte formschlüssig eingreifendes Hakenteil (Auslösehebel) gegen Federkraft nach hinten beweglich sein und in oder auf einem Gelenkarm geführt werden, der um die Drehachse begrenzt verschwenkbar ist.

Besonders vorteilhaft ist es, wenn die Verschwenkbewegung der Pedalteile der hinteren Verbindung, insbesondere des Gelenkarmes von der mittleren Stellung zu beiden äußeren Schwenkstellungen durch federnde Mittel gedämpft ist. Hierbei sollte die Kraft der federnden Mittel zunehmen je weiter sich die Pedalteile der hinteren Verbindung insbesondere des Gelenkarms von der mittleren Stellung entfernen. Auch können die federnden Mittel ein oder zwei Drehfedern sein.

Um zu verhindern, daß bei einer Bewegung des Schuhs nach hinten die Verbindung sich unbeabsichtigt löst, wird vorgeschlagen, die Adapterplatte innerhalb des begrenzten Drehbewegungsbereich gegen eine Bewegung nach hinten durch einen zur Adapterplatte senkrechten Arretierstift gehalten ist, der in dem Pedal axial beweglich geführt ist, durch eine Feder nach oben hin beaufschlagt ist und mit seinem oberen Ende in eine bogenförmige Nut in der Unterseite der Adapterplatte hineinreicht. Dies hat zudem den Vorteil, daß auf konstruktiv einfache Weise und in wenigen Teilen ein sicherer Halt geboten wird. Damit der Stift ein Lösen der Adapterplatte bei einer Bewegung über dem begrenzten Bewegungsbereich hinaus nicht vehindert, wird vorgeschlagen, daß die beiden Enden der Nut Schrägflächen bilden, durch die der Stift bei einer Bewegung der Adapterplatte über den begrenzten Bereich hinaus nach unten aus der Nut heraus drückbar ist. Eine konstruktiv einfache Lösung wird dann geschaffen, wenn die Drehachse des Gelenkarms koaxial zur Achse des Stifts ist.

Ein Ausführungsbeispiel der Erfindung ist in der Zeichnung dargestellt und wird im folgenden näher beschrieben. Es zeigen

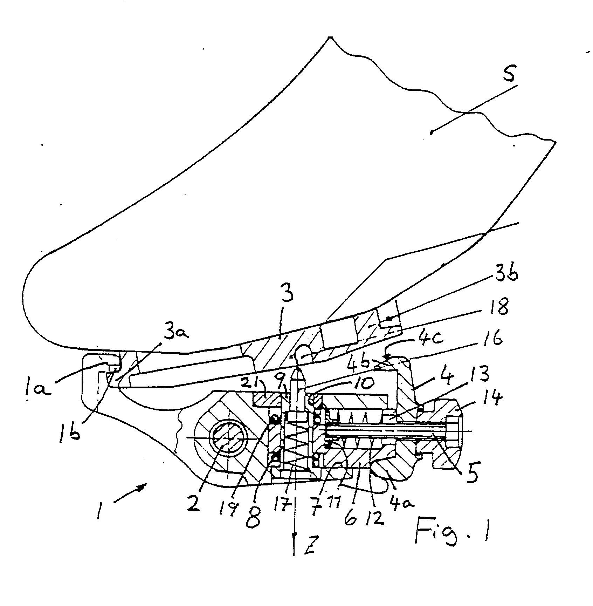

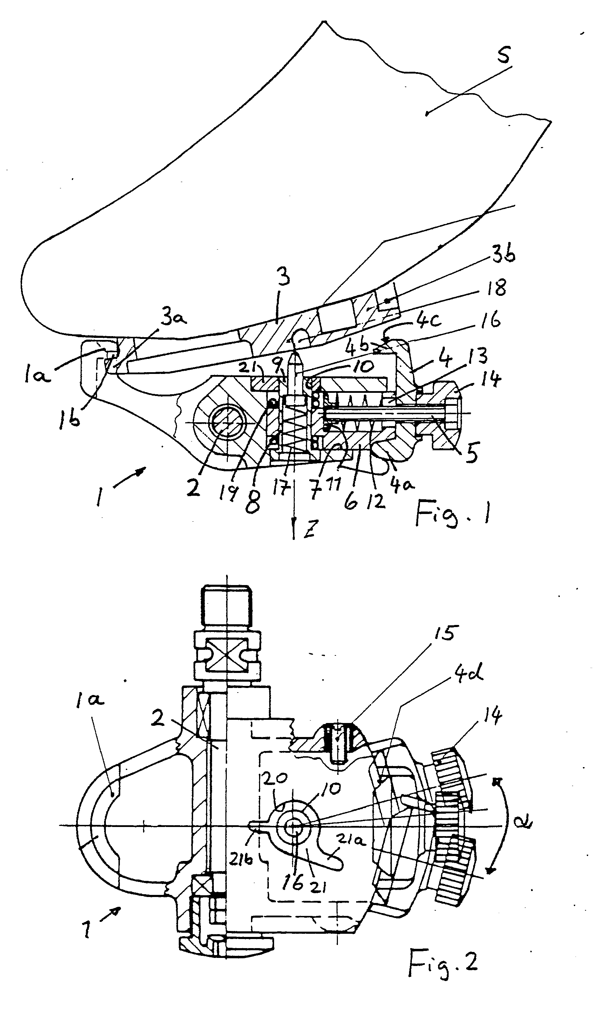

Figur 1 einen senkrechten Längsschnitt durch Pedale und Adapterplatte und

Figur 2 eine Draufsicht auf die Pedale.

Der aus vollem Material bestehende Körper eines Pedals 1 ist um eine waagerechte Achse 2 drehbeweglich an der Kurbel eines Fahrrades befestigt. Der vordere Teil der Pedale 1 ist zu einem Haken 1a hochgebogen um eine hinterschnittene Ausnehmung 1b zu bilden. In diese Ausnehmung 1b wird der vordere nasenförmige Bereich 3a einer Adapterplatte 3 eingelegt, die um diese Stelle bei waagerechter Pedale in einer waagerechten Ebene verschwenkbar ist. Die Adapterplatte 3 ist an der Unterseite eines Schuhs S befestigt.

Am· hinteren Ende des Pedals 1 ist ein Auslösehebel 4 über eine Stange 5 an einem Gelenkarm 6 befestigt. Der Gelenkarm 6 liegt in einer nach hinten offenen Ausnehmung 7 um eine senkrechte Achse 8 verschwenkbar ein, wobei die Achse 8 von einem rohrförmigen Teil 9 gebildet wird, das nach oben hin bis auf eine Bohrung 10 geschlossen ist. In einer waagerechten axialen Bohrung des Gelenkarms 6 liegt die Stange 5 axial verschieblich ein und trägt an ihrem inneren Ende ein Lagerstück 11, an dem eine Feder 12 anliegt um die Stange 5 nach innen zu drücken. Die Stange 5 ist durch eine Bohrung 13 aus dem Gelenkarm 6 nach außen geführt, um dort den Auslösehebel 4 zu tragen, der durch ein knopfförmiges Endstück 14 nachgiebig gehalten ist.
Der Verstellknopf 14 kann durch ein Innengewinde auf der Gewindestange 5 aufgeschraubt sein um den Druck der Feder 12 verändern zu können.

Der Hebel 4 ist um einen unteren Vorsprung 4a verschwenkbar, wenn ein oberer Vorsprung 4b nach hinten gedrückt wird, wobei dies nur bei Überwindung der Federkraft 12 erfolgen kann. Der obere Vorsprung 4b weist eine obere Schräge 4c auf, auf der das hintere Ende der Adapterplatte 3 zur Anlage gelangt, ,wenn der Fahrer mit seinem Schuh bei vorderem eingelegtem Ende nach unten drückt und damit der Vorsprung 4b in einer Ausnehmung 3b am hinteren Ende der Adapterplatte 3 einrastet. Hierbei weist die Ausnehmung 3b eine Form auf, die der Form des Vorsprungs 4b entspricht, so daß der Vorsprung 4b formschlüssig in der Ausnehmung 3b einliegt.

Der Gelenkarm 6 ist um die Achse 8 begrenzt um den Winkel α verschwenkbar. Zu beiden Seiten dieses freien Verschwenkwinkels (Drehspiels) sind Anschläge 15 in Form von Madenschrauben im Körper des Pedals angeordnet, die von außen betätigbar sind und damit mehr oder weniger in die Ausnehmung 7 ,hineingeschraubt werden können, in der der Gelenkarm verschwenkt wird. Erst wenn der Gelenkarm 6 einen der beiden Anschläge 15 erreicht hat und die Adapterplatte 3 in derselben Richtung darüberhinaus verschwenkt wird, wird der Vorsprung 4b des Auslösehebels 4 aus der Ausnehmung 3b herausgedrückt, da der Vorsprung 4b zu beiden Seiten Schrägflächen 4d aufweist, die an entsprechenden Schrägflächen der Ausnehmung 3b anliegen.

In der Bohrung 10 des Teils 9 liegt ein Stift 16 senkrecht verschieblich ein, der durch eine Feder 17 nach oben gedrückt wird. Der an seinem oberen Ende konisch zulaufende Stift 16 liegt in einer gekrümmten Nut 18 in der Unterseite der Adapterplatte 3 ein, wobei die Nut 18 so lang ausgeführt ist, daß der größte Verschwenkwinkel α möglich ist. Die Nut 18 bildet somit einen Teilbereich eines Kreises um den Drehpunkt von 1a, 1b, wobei die Länge des Radius dem Abstand von 1a, 1b zu der Bohrung 10 entspricht.

Damit der Gelenkarm 6 sich stets in die mittlere Stellung zurück stellt und darüberhinaus die vom Fuß ausgeübten Schwenkbewegungen gedämpft werden, liegt um das Teil 9 eine schraubenförmige Drehfeder 19, die mit einem Ende am Körper des Pedals fest ist und mit dem zweiten Ende am Gelenkarm 6 befestigt ist. Teil 9 und Feder 19 liegen in einer zylindrischen Ausnehmung 20 ein, die durch einen oberen Deckel 21 verschlossen. Die Ausnehmung 20 weist seitliche Nuten 21a, 21b, um ein Ende der Feder 19 aufnehmen zu können. Statt einer Feder 19 können auch zwei Schraubenfedern zur Dämpfung des Hebels 4 in der Ausnehmung 20 einliegen, die koaxial zueinander sind. Hierbei kann eine Drehfeder zum Dämpfen und Zurückstellen des Hebels 4 zur einen Seite und die zweite Feder zum Dämpfen und Zurückstellen zur anderen Seite benutzt werden.

## Ansprüche

1. Vorrichtung zum Halten eines Schuhs (5) an einem Fahrradpedal (1) mit einer unter dem Schuh befestigten Adapterplatte (3), die an der Pedaloberseite im vorderen und hinteren Bereich jeweils durch formschlüssige, insbesondere hakenförmige Verbindungen (1b, 3a, 3b, 4b) gehalten ist, wobei die Adapterplatte im befestigten Zustand um den vorderen Verbindungsbereich (1b, 3a) bei weiterer Anlage auf der Pedaloberseite verdrehbar und hierdurch der hintere Teil der Adapterplatte (3) seitlich verschwenkbar ist um das zweiseitige Formgehemme der hinteren Verbindung (3b, 4b) zu lösen, **dadurch gekennzeichnet,** daß die Pedalteile (4, 6) der hinteren Verbindung zusammen mit der um die vordere Verbindung (1h, 3a) drehbaren Adapterplatte (3) begrenzt drehbeweglich und erst außerhalb dieses freien Bewegungsbereichs (α) lösbar sind, und daß die Bewegung der Pedalteile (4,6) der hinteren Verbindung, insbesondere des Gelenkarms (6) zu beiden Seiten durch verstellbare Anschläge (15) begrenzt ist.

2. Vorrichtung nach Anspruch 1, **dadurch gekennzeichnet,** daß die Pedalteile (4, 6) der hinteren Verbindung um eine zwischen vorderer (1b, 3a) und hinterer Verbindung (3b, 4b) liegende zur Adapterplatte (3) senkrechte Drehachse (8) begrenzt verschwenkbar sind.

3. Vorrichtung nach Anspruch 2, **dadurch gekennzeichnet,** daß ein in eine Ausnehmung (3b) der Adapterplatte formschlüssig eingreifendes Hakenteil (4) (Auslösehebel) gegen Federkraft nach hinten beweglich ist und in oder auf einem Gelenkarm (6) geführt ist, der um die Drehachse (8) begrenzt verschwenkbar ist.

4. Vorrichtung nach Anspruch 2 oder 3, **dadurch gekennzeichnet,** daß die Verschwenkbewegung der Pedalteile (4, 6) der hinteren Verbindung, insbesondere des Gelenkarmes (6) von der mittleren Stellung zu beiden äußeren Schwenkstellungen durch federnde Mittel (19) gedämpft ist.

5. Vorrichtung nach Anspruch 4, **dadurch gekennzeichnet,** daß die Kraft der federnden Mittel (19) zunimmt je weiter sich die Pedalteile (4, 6) der hinteren Verbindung insbesondere des Gelenkarms von der mittleren Stellung entfernen.

6. Vorrichtung nach Anspruch 4 oder 5, **dadurch gekennzeichnet,** daß die federnden Mittel (19) ein oder zwei Drehfedern sind.

7. Vorrichtung nach einem der vorherigen Ansprüche, **dadurch gekennzeichnet,** daß die Adapterplatte (3) innerhalb des begrenzten Drehbewegungsbereich gegen eine Bewegung nach hinten durch einen zur Adapterplatte senkrechten Arretierstift (16) gehalten ist, der in dem Pedal (1) axial beweglich geführt ist, durch eine Feder (17) nach oben hin beaufschlagt ist und mit seinem oberen Ende in eine bogenförmige Nut (18) in der Unterseite der Adapterplatte (3) hineinreicht.

8. Vorrichtung nach Anspruch 7, **dadurch gekennzeichnet,** daß die beiden Enden der Nut (18) Schrägflächen bilden, durch die der Stift (16) bei einer Bewegung der Adapterplatte (3) über den begrenzten Bereich hinaus nach unten aus der Nut (18) heraus drückbar ist.

9. Vorrichtung nach Anspruch 7 oder 8, **dadurch gekennzeichnet,** daß die Drehachse (8) des Gelenkarms (6) koaxial zur Achse des Stifts (16) ist.

Fig. 1

Fig. 1

Fig. 2